# FASCICULE DE BREVET EUROPEEN

(11) **EP 2 948 320 B1**
(45) Date de publication et mention de la délivrance du brevet: **16.11.2016**
(21) Numéro de dépôt: 14701037.5
(22) Date de dépôt: 21.01.2014
(51) Int. Cl.: B60C 1/00, C08K 3/00, C08L 23/08

(54) **COMPOSITION DE CAOUTCHOUC COMPRENANT UN ÉLASTOMÈRE DIÉNIQUE FORTEMENT SATURÉ**
KAUTSCHUKZUSAMMENSETZUNG MIT EINEM HOCHGESÄTTIGTEN DIENELASTOMER
RUBBER COMPOSITION COMPRISING A HIGHLY SATURATED DIENE ELASTOMER

(30) Priorité: 22.01.2013 FR 1350557
(43) Date de publication de la demande: 02.12.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: THUILLIEZ, Julien, F-63040 Clermont-Ferrand Cedex 9 (FR); SCHNELL, Benoît, F-63040 Clermont-Ferrand Cedex 9 (FR); CLADIERE, Julien, F-63040 Clermont-Ferrand Cedex 9 (FR)
(74) Mandataire: Gandon-Pain, Sylvie
(86) Numéro de dépôt international: PCT/EP2014/051068
(87) Numéro de publication internationale: WO 2014/114607

(56) Documents cités:
- EP-A1- 1 092 731
- WO-A2-2012/106694

## Description

### DOMAINE DE L'INVENTION

La présente invention concerne une composition de caoutchouc renforcée à base d'une matrice élastomère comprenant un élastomère diénique fortement saturé, ainsi qu'un article semi-fini comprenant une telle composition et qu'un pneumatique incorporant un tel article semi-fini.

### ETAT DE LA TECHNIQUE

Depuis que les économies de carburant et la nécessité de préserver l'environnement sont devenues une priorité, il est souhaitable de produire des mélanges possédant de bonnes propriétés de résistance à l'usure tout en ayant une hystérèse aussi faible que possible afin de pouvoir les mettre en oeuvre sous forme de compositions de caoutchouc utilisables pour la fabrication de divers produits semi-finis entrant dans la composition de pneumatique, tels que par exemple des bandes de roulement, ce afin d'obtenir des pneumatiques possédant une résistance à l'usure améliorée sans pénalisation de la résistance au roulement.

Idéalement, par exemple, une bande de roulement de pneumatique doit obéir à un grand nombre d'exigences techniques, souvent antinomiques, parmi lesquelles une résistance élevée à l'usure tout en offrant au pneumatique une faible résistance au roulement et une adhérence élevée tant sur sol sec que sur sol mouillé, enneigé ou verglacé.

Pour améliorer la résistance à l'usure, on le sait, une certaine rigidité de la bande de roulement est souhaitable, cette rigidification de la bande de roulement pouvant être obtenue par exemple en augmentant le taux de charge renforçante ou en incorporant certaines résines renforçantes dans les compositions de caoutchouc constitutives de ces bandes de roulement.

Malheureusement, l'expérience montre qu'une telle rigidification de la bande de roulement pénalise de manière connue, le plus souvent de manière rédhibitoire, les propriétés de résistance au roulement, en s'accompagnant d'une augmentation importante des pertes hystérétiques de la composition de caoutchouc. L'amélioration de la performance de rigidité en gardant une faible résistance au roulement est de ce fait une préoccupation permanente pour les concepteurs de pneumatique.

Il existe donc un besoin permanent de fournir une composition de caoutchouc qui permette d'obtenir des pneumatiques possédant une résistance à l'usure améliorée sans pénalisation de la résistance au roulement.

Au vu de ce qui précède, il est un objectif général de fournir des compositions de caoutchouc pour pneumatique qui satisfassent un compromis de propriétés rigidité/hystérèse acceptable pour un usage en pneumatique.

### BREVE DESCRIPTION DE L'INVENTION

Cet objectif est atteint en ce que les Inventeurs ont mis au point une composition de caoutchouc pour pneumatique qui permette d'atteindre un niveau de rigidité satisfaisant en maintenant des propriétés d'hystérèse acceptables.

Ainsi, l'invention a pour objet une composition de caoutchouc pour pneumatique comprenant une charge renforçante et un élastomère fortement saturé, permettant d'atteindre le compromis de propriété visé.

Un autre objet de l'invention est un procédé de préparation d'une telle composition de caoutchouc pour pneumatique.

L'invention a encore pour objet un article semi-fini comprenant une telle composition de caoutchouc.

L'invention a aussi pour objet un pneumatique incorporant un tel article semi-fini.

### DESCRIPTION DETAILLEE DE L'INVENTION

Dans la présente description, sauf indication expresse différente, tous les pourcentages (%) indiqués sont des % en poids. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par "composition à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Un premier objet de l'invention est une composition de caoutchouc à base d'une charge renforçante et d'une matrice élastomère comprenant au moins un élastomère diénique fortement saturé, caractérisé en ce que l'élastomère fortement saturé comprend au moins les unités suivantes, distribuées statistiquement au sein de l'élastomère:
A)

   -CH₂-CH₂-

   selon une fraction molaire de m %
B) 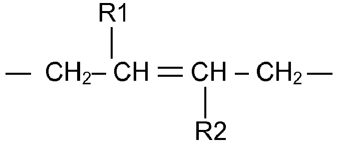 selon une fraction molaire de n%
C) 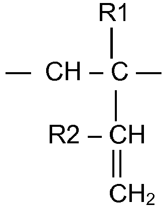 selon une fraction molaire de o %
   avec R1 et R2 , identiques ou différents, désignent un atome d'hydrogène, un radical méthyle ou un radical phényle substitué ou non en position ortho, méta ou para par un radical méthyle; de préférence R1 et R2 , identiques ou différents, désignent un atome hydrogène ou un radical méthyle, plus préférentiellement R1 et R2 désignent tous deux un atome d'hydrogène,
D) 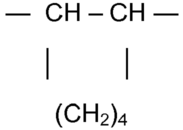 selon un pourcentage molaire de p %
   le motif D formant un cycle hydrocarboné bivalent à 6 atomes de carbone, de type 1,2-cyclohexane
E) 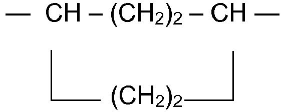 selon un pourcentage molaire de q %
   le motif E formant un cycle hydrocarboné bivalent à 6 atomes de carbone de type 1,4-cyclohexane,
   avec m, n, o, p et q étant des nombres allant de 0 à 100,
      et en ce que l'élastomère fortement saturé présente les caractéristiques suivantes:
      - m+n+o+p+q=100
      - m≥50
      - n+o+p+q≥10
      - 15≥p+q≥2

   De préférence, les taux molaires de chacune des unités de l'élastomère fortement saturé présente au moins un des critères suivants, et plus préférentiellement tous:
   - m≥65
   - n+o+p+q≥15, de préférence encore 20
   - 10≥p+q≥2
   - 1≥n/(o+p+q)
   - Lorsque q est non nul, 20≥p/q≥1

   Selon une variante de l'invention, l'élastomère fortement saturé est constitué uniquement d'unités choisies parmi les catégories A, B, C, D et E selon leurs taux molaires respectifs.
   Selon une autre variante de l'invention, l'élastomère fortement saturé comprend, outre des unités choisies parmi les catégories A, B, C, D et E, des unités de catégorie F selon un taux molaire noté r% inférieur à 25 %, particulièrement inférieur à 10%, par rapport à la totalité de l'élastomère:
F) 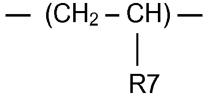 selon un pourcentage molaire de r%
   avec R7 désignant un radical alkyle ayant 1 à 4 atomes de carbone, ou un radical aryle, et la condition que m+n+o+p+q+r=100.

Selon ces deux variantes, il est une mise en oeuvre particulière de l'invention selon laquelle l'élastomère fortement saturé est tel que R1 et R2 sont identiques et désignent un atome d'hydrogène.

Il est entendu que cet élastomère diénique fortement saturé peut être constitué par un mélange d'élastomères diéniques fortement saturés qui se différencient des uns des autres par leurs microstructures ou par leurs macrostructures.

Selon l'invention, l'élastomère diénique fortement saturé présente une masse molaire moyenne en nombre (Mn) d'au moins 60 000 g/mol et d'au plus 1 500 000 g/mol. L'indice de polydispersité Ip, égal à Mw/Mn (Mw étant la masse molaire moyenne en poids), est compris entre 1,20 et 3,00.

L'élastomère fortement saturé peut être obtenu selon différentes méthodes de synthèses connues de l'homme du métier, notamment en fonction des valeurs visées de m, n, o, p, q et r. Généralement, l'élastomère fortement saturé peut être préparé par copolymérisation d'au moins un monomère diène conjugué et d'éthylène et selon des méthodes de synthèse connues. On peut citer à ce titre les complexes métallocènes décrits dans les documents EP 1 092 731 A1, EP 1 554 321 A1, EP 1 656 400 A1, EP 1 829 901 A1, EP 1 954 705 A1, EP 1 957 506 A1, au nom des Demanderesses.

A titre de monomère diène conjugué convient notamment un diène conjugué ayant de 4 à 12 atomes de carbone. On peut citer le butadiène-1,3, le 2-méthyl-1,3-butadiène, 2,3-diméthyl-1,3-butadiène, un aryl-1,3-butadiène, le 1,3-pentadiène Selon un aspect préférentiel, le monomère diène est le butadiène-1,3 ou du 2-méthyl-1,3-butadiène, plus préférentiellement du butadiène-1,3.

Ainsi, selon certaines de ces méthodes de synthèse, l'élastomère fortement saturé peut être obtenu par copolymérisation d'au moins un monomère diène conjugué et de l'éthylène, en présence d'un système catalytique comprenant un complexe métallocène de lanthanide avec des ligands *ansa* de type fluorényle. On peut citer à ce titre les complexes métallocènes décrits dans les documents EP 1 092 731 A1, EP 1 554 321 A1, EP 1 954 705 A1.

Selon la variante de l'invention introduisant le motif F dans la chaîne polymérique, l'élastomère fortement saturé peut être obtenu par copolymérisation d'au moins un monomère diène conjugué et de deux oléfines, telles que l'éthylène et une alpha-oléfine, en présence d'un système catalytique comprenant un complexe métallocène de lanthanide avec des ligands de type *ansa* cyclopentadiényle-fluorényle. Une variante consiste encore à utiliser un dérivé du styrène comme termonomère, associé à au moins un monomère diène conjugué et l'éthylène. On peut citer à ce titre les complexes métallocènes décrits dans les documents EP 1 092 731 A1, EP 1 656 400 A1, EP 1 829 901 A1, EP 1 957 506 A1, au nom des Demanderesses.

A titre de monomère alpha-oléfine convient par exemple une alpha-oléfine ayant de 3 à 18 atomes de carbone, avantageusement ayant 3 à 6 atomes de carbone. On peut citer le propylène, le butène, le pentène, l'hexène ou un mélange de ces composés.

Selon une ou plusieurs variantes de synthèse de l'élastomère fortement saturé, celui-ci est préparé conformément aux documents cités précédemment, en adaptant les conditions de polymérisation par des moyens connus de l'homme de l'art, de manière à atteindre des valeurs de masse molaire moyenne en nombre (Mn) d'au moins 60 000 g/mol. A titre d'illustration, le temps de polymérisation peut être significativement augmenté de telle sorte que la conversion en monomère soit supérieure, conduisant alors à l'obtention de masses molaires d'au moins 60 000 g/mol. A titre d'illustration, lors de la préparation des systèmes catalytiques selon les documents cités précédemment, la stoechiométrie de l'agent d'alkylation par rapport au(x) complexe(s) métallocène(s) est diminuée, de manière à diminuer les réactions de transfert de chaîne et permettre l'obtention de masses molaires d'au moins 60 000 g/mol.

La composition de caoutchouc objet de l'invention comprend, selon une variante, l'élastomère diénique fortement saturé comme constituant unique de la matrice élastomère.

Selon une autre variante, la matrice élastomère de la composition de caoutchouc conforme à l'invention peut comprendre en outre au moins un autre élastomère diénique différent de l'élastomère diénique fortement saturé. Selon cette variante, cet autre élastomère est présent dans des proportions d'au plus 60 pce (parties en poids pour cent parties d'élastomère total), de préférence d'au plus 45 pce. En outre, cet élastomère est présent de préférence dans des proportions d'au moins 5 pce.

Selon cette variante, cet autre élastomère diénique peut être tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans ce dernier cas, le copolymère contient de 20 à 99% en poids d'unités diéniques et de 1 à 80% en poids d'unités vinylaromatique.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Cet autre élastomère diénique peut avoir toute microstructure. Il peut être à blocs, statistique, séquencé, microséquencé, et être préparé en émulsion ou en solution. Il peut être couplé et/ou étoilé ou encore fonctionnalisé avec un agent de couplage et/ou d'étoilage ou de fonctionnalisation.

Préférentiellement, cet autre élastomère diénique utilisé dans l'invention est choisi dans le groupe des élastomères diéniques fortement insaturés (à savoir comprenant au moins 50% en poids de motifs d'origine diénique) constitué par les polybutadiènes (BR), les polyisoprènes (IR) de synthèse, le caoutchouc naturel (NR), les copolymères de butadiène, les copolymères d'isoprène. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Il est entendu que cet autre élastomère diénique peut être constitué par un mélange d'élastomères diéniques qui se différencient des uns des autres par leur microstructure, par leur macrostructure ou par la présence d'une fonction, par la nature ou la position de cette dernière sur la chaîne élastomère.

La composition de caoutchouc conforme à l'invention a pour autre caractéristique essentielle de comprendre une charge renforçante par exemple du noir de carbone, une charge inorganique renforçante telle que de la silice à laquelle est associé de manière connue un agent de couplage, ou encore un mélange de ces deux types de charge.

Selon une variante de l'invention, la charge renforçante est majoritairement constituée de noir de carbone, c'est-à-dire qu'elle comprend au moins 50% en poids du poids total de la charge, de noir de carbone.

Selon cette variante la charge renforçante peut être constituée à 100% en poids de noir de carbone. Si la charge renforçante comprend moins de 100% en poids de noir de carbone, le complément de charge est apporté par au moins une autre charge renforçante, notamment la silice.

Selon une autre variante de l'invention, la charge renforçante est majoritairement autre que du noir de carbone, c'est-à-dire qu'elle comprend plus de 50% en poids du poids total de la charge, d'une ou de plusieurs charges autres que du noir de carbone, notamment une charge inorganique renforçante telle que la silice, voire elle est exclusivement constituée d'une telle charge.

Selon cette autre variante, lorsque du noir de carbone est également présent, il peut être utilisé à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone.

De manière préférentielle, le taux de charge renforçante totale (noir de carbone et/ou autre charge renforçante telle que la silice) est compris entre 10 et 200 pce, plus préférentiellement entre 30 et 150 pce, l'optimum étant de manière connue différent selon les applications particulières visées.

Comme noirs de carbone conviennent tous les noirs de carbone, utilisés individuellement ou sous forme de mélanges, notamment les noirs conventionnellement mis en oeuvre dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Comme charge inorganique renforçante autre que du noir de carbone, doit être entendu ici toute autre charge inorganique ou minérale, quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyles (OH) à sa surface.

De telles charges inorganiques renforçantes sont notamment des charges minérales du type siliceux, préférentiellement la silice (SiO2). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g, notamment entre 60 et 300 m2/g. On citera également les charges minérales du type alumineux, en particulier de l'alumine (Al2O3) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges renforçantes, en particulier de silices hautement dispersibles telles que décrites ci-dessus.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on peut utiliser comme agents de couplage des organosilanes, notamment des alkoxysilanes polysulfurés ou des mercaptosilanes, ou encore des polyorganosiloxanes au moins bifonctionnels. Des agents de liaison silice/élastomère, notamment, ont été décrits dans un grand nombre de documents, les plus connus étant des alkoxysilanes bifonctionnels tels que des alkoxysilanes polysulfurés.

Dans les compositions conformes à l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante autre que du noir de carbone. Son taux est aisément ajusté par l'homme du métier selon le taux de cette charge; il est typiquement de l'ordre de 0,5% à 15% en poids par rapport à la quantité de charge inorganique renforçante autre que du noir de carbone.

Les compositions de caoutchouc conformes à l'invention peuvent également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir, des charges organiques renforçantes qui peuvent remplacer tout ou partie des noirs de carbone ou des autres charges inorganiques renforçantes décrites plus haut. Comme exemples de charges organiques renforçante, on peut citer les charges organiques de polyvinyle fonctionnalisé telles que décrites dans les demandes WO-A-2006/069792, WO-A-2006/069793, WO-A-2008/003434 et WO-A-2008/003435.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters, les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés.

L'invention à également pour objet un procédé de préparation d'une composition de caoutchouc telle que décrite précédemment.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc selon l'invention comporte au moins les étapes suivantes :
- la réalisation, à une température maximale comprise entre 130 °C et 200 °C, de préférence entre 145°C et 185°C, d'un premier temps de travail thermomécanique (parfois qualifié de phase " non productive") des constituants de base nécessaires de la composition de caoutchouc, à l'exception du système de réticulation et le cas échéant un promoteur d'adhésion, par incorporation de manière intime, par malaxage en une ou plusieurs étapes, à la matrice élastomère comprenant l'élastomère fortement saturé, d'ingrédients de la composition, puis
- la réalisation, à une température inférieure à ladite température maximale dudit premier temps, de préférence inférieure à 120 °C, d'un second temps de travail mécanique au cours duquel est incorporé ledit système de réticulation et le cas échéant un promoteur d'adhésion,

Selon des variantes de l'invention, le procédé de préparation de la composition de caoutchouc comprend l'étape de préparation de l'élastomère fortement saturé telle que décrite plus haut selon ses différentes méthodes de synthèse.

La composition finale ainsi obtenue peut ensuite être calandrée, par exemple sous la forme d'une feuille, d'une plaque ou encore extrudée, par exemple pour former un profilé de caoutchouc utilisable comme produit semi- fini en caoutchouc destiné au pneumatique.

L'invention a également pour objet un produit semi-fini en caoutchouc comprenant une composition de caoutchouc renforcée selon l'invention.

L'invention a également pour objet un pneumatique dont au moins un de ses éléments constitutifs est un produit semi-fini en caoutchouc comprenant une composition de caoutchouc renforcée selon l'invention.

En raison de l'amélioration de la rigidité qui caractérise une composition de caoutchouc renforcée selon l'invention, sans détériorer les propriétés d'hystérèse, on notera qu'un pneumatique dont la bande de roulement comprend la composition présente une résistance à l'usure avantageuse sans pénaliser la résistance au roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### • MESURES ET TESTS UTILISES

Les compositions de caoutchouc sont caractérisées après cuisson, comme indiqué ci-après.

### a) Propriétés mécaniques

### Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 10% et 100% d'allongement (notés respectivement MA10 et MA100). Les mesures de traction pour déterminer les modules accommodés sécants sont effectuées à la température de 60°C +/-2°C, et dans les conditions normales d'hygrométrie (50 +/- 5% d'humidité relative).

### a) Propriétés dynamiques

Les propriétés dynamiques G* et tan(δ)max, représentative de l'hystérèse, sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente, en particulier dans les exemples cités, la température de mesure est de 60°C. On effectue un balayage en amplitude de déformation de 0,1% à 100% crête-crête (cycle aller), puis de 100% à 0,1% crête-crête (cycle retour). Les résultats exploités sont le module complexe de cisaillement dynamique (G*) et le facteur de perte tan(δ). Pour le cycle retour, on indique la valeur maximale de tan(δ) observée, noté tan(δ)max.

### • EXEMPLIFICATION

Les essais qui suivent démontrent l'amélioration de la rigidité d'une composition de caoutchouc selon l'invention, tout en conservant le même niveau d'hystérèse donc de résistance au roulement, voire en améliorant l'hystérèse en baissant sa valeur, comparativement à des compositions témoins. Les compositions testées peuvent tout particulièrement constituer une bande de roulement, pour lesquelles la charge renforçante est du noir de carbone.
**L'élastomère 1** est un SBR constitué de la façon suivante: 15% de motifs styrène, 20% de motifs butadiène 1,2 et 65% de motifs butadiène 1,4 (Tg = -49°C) ;
**L'élastomère 2** est du caoutchouc naturel.
**L'élastomère A** est un EBR (Ethylene Butadiene Rubber) avec 68% molaire de motifs éthyléniques obtenu par copolymérisation de l'éthylène et du butadiène, selon une méthode de polymérisation conforme à l'exemple 4-2 de la demande de brevet EP1954705B1 au nom des Demanderesses. Le temps de polymérisation a été ajusté de manière à obtenir une masse molaire Mn = 170 000 g/mol avec un indice de polydispersité égal à 1,8.
**L'élastomère B** est un EBR (Ethylene Butadiene Rubber) avec 68% molaire de motifs éthyléniques obtenu par copolymérisation de l'éthylène et du butadiène, selon une méthode de polymérisation conforme à l'exemple 7-2 de la demande de brevet EP1954705B1 au nom des Demanderesses. Le temps de polymérisation a été augmenté de manière à obtenir des masses molaires supérieures, Mn égale à 164 000 g/mol, sans modifications significatives des autres caractéristiques de l'EBR.

Les caractéristiques des élastomères sont récapitulées dans le tableau 1.

**Tableau 1**

| Elastomère | 1 | A | B |
|---|---|---|---|
| Double liaison (% molaire) | 85 | 24 | 24 |
| Cycle intrachaîne 1,2-cyclohexyl (% molaire) | - | 8 | 6 |
| Cycle intrachaîne 1,4-cyclohexyl (% molaire) | - | - | 2 |
| 1,2 (% molaire) | 20 | 15 | 18 |
| 1,4 (% molaire) | 65 | 9 | 6 |
| Motif éthylénique CH2-CH2 (% molaire) | - | 68 | 68 |

### Les compositions

On compare six compositions reportées dans le tableau 2 ci-après. Trois d'entre elles sont non-conformes vis-à-vis de la formulation préconisée par l'invention :
**Composition T1 :** témoin avec élastomère diénique insaturé,
**Composition T2 :** témoin avec élastomère diénique insaturé rigidifié via l'augmentation du taux de charge
**Composition T3 :** témoin avec un coupage d'élastomères diéniques insaturés.

Les **compositions M1 et M2** sont conformes à l'invention et à base de l'élastomère diénique fortement saturé noté A.

La **composition N** est conforme à l'invention et est à base de l'élastomère diénique fortement saturé noté B.

Pour les essais qui suivent, on procède de la manière suivante :
On introduit dans un mélangeur interne (taux de remplissage final : environ 70% en volume), dont la température initiale de cuve est d'environ 80°C, successivement le ou les élastomère(s) diénique(s), les charges renforçantes (silice et noir de carbone), ainsi que les divers autres ingrédients a l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfamide sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

Dans le tableau 2 qui suit sont détaillées les compositions testées:

**Tableau 2**

| Composition | T1 | T2 | T3 | M1 | M2 | N |
|---|---|---|---|---|---|---|
| Diénique insaturé 1 (1) | 100 | 100 | 60 | | | |
| Diénique insaturé 2 (2) | | | 40 | 40 | 20 | 40 |
| Diénique fortement saturé (3) | | | | 60 (A) | 80 (A) | 60 (B) |
| Charge (4) | 47,5 | 54 | 47,5 | 47,5 | 47,5 | 47,5 |
| Résine (5) | 0,5 | 0,5 | 0,5 | 0,5 | 0,5 | 0,5 |
| Paraffine 6266 | 1 | 1 | 1 | 1 | 1 | 1 |
| 6PPD | 2 | 2 | 2 | 2 | 2 | 2 |
| TMQ | 1 | 1 | 1 | 1 | 1 | 1 |
| ZnO | 3 | 3 | 3 | 3 | 3 | 3 |
| Acide stéarique | 2,5 | 2,5 | 2,5 | 2,5 | 2,5 | 2,5 |
| CBS | 0,6 | 0,6 | 0,6 | 0,6 | 0,6 | 0,6 |
| HMT3H | 0,6 | 0,6 | 0,6 | 0,6 | 0,6 | 0,6 |
| Soufre | 1,5 | 1,5 | 1,5 | 1,5 | 1,5 | 1,5 |

| | | | | | | |
|---|---|---|---|---|---|---|
| *(1) Elastomère insaturé 1 décrit plus haut* *(2) Caoutchouc naturel* *(3) Elastomère fortement saturé préparé plus haut* *(4) Noir de carbone N347* *(5) Résine formophénolique* *(6) 2,2,4-trimethyl-1,2-dihydroquinolineN-cyclohexyl-2-benzothiazyl-sulfénamide* (7) *Hexaméthylène tétramine* | | | | | | |

### Résultats

Les propriétés des compositions sont reportées dans le tableau 3 ci-dessous.

**Tableau 3**

| Composition | T1 | T2 | T3 | M1 | M2 | N |
|---|---|---|---|---|---|---|
| tan δₘₐₓ (60°C, 10Hz) | 0,19 | 0,22 | 0,19 | 0,17 | 0,16 | 0,17 |
| G* (MPa) (60°C, 10Hz, 10%) | 2,0 | 2,4 | 2,1 | 2,2 | 2,4 | 2,4 |
| G* (MPa) (60°C, 10Hz, 50%) | 1,6 | 1,8 | 1,6 | 1,8 | 1,8 | 2,0 |
| MA10 | 5,5 | 6,3 | 5,5 | 7,4 | 7,6 | 7,7 |
| MA100 | 2,1 | 2,5 | 2,3 | 3,0 | 3,2 | 3,6 |

On constate que la rigidité à faible et moyenne déformations des compositions conformes à l'invention est supérieure de celle des compositions témoins T1 et T3, et du même ordre que celle de la composition témoin T2 comportant un taux de charge plus élevé que la composition témoin T1 en vue d'améliorer la rigidité. On observe bien que cette augmentation du taux de charge pénalise les propriétés hystérétiques de la composition témoin T2 au vu de la composition témoin T1. Cette amélioration des propriétés mécaniques est favorable en matière de résistance à l'usure d'un pneumatique muni d'une bande de roulement constituée par une telle composition.
Malgré cette amélioration de la rigidité, la composition conforme à l'invention exhibe des propriétés hystérétiques nettement améliorées par rapport à celles des compositions témoins T1 et T3, contrairement à ce qui est observé pour la composition témoin T2 comparativement aux compositions T1 et T3.
Ceci est favorable pour diminuer la résistance au roulement d'un pneumatique muni d'une bande de roulement constituée par une telle composition.

En conclusion, les résultats de ces essais démontrent que l'emploi d'un élastomère diénique fortement saturé selon l'invention, permet d'améliorer de manière notable la rigidité des compositions de caoutchouc selon l'invention et donc d'améliorer la résistance à l'usure de pneumatiques les contenant, tout en diminuant l'hystérèse des compositions et donc la résistance au roulement des pneumatiques par rapport à un pneumatique conventionnel.

## Revendications

1. Composition de caoutchouc à base d'une charge renforçante et d'une matrice élastomère comprenant un élastomère diénique fortement saturé, **caractérisée en ce que** l'élastomère fortement saturé comprend au moins les unités des catégories A, B, C, D et E suivantes, distribuées statistiquement au sein de l'élastomère,
A)
-CH₂-CH₂-
selon une fraction molaire de m %
B) 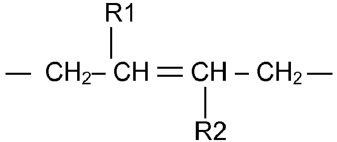 selon une fraction molaire de n%
C) 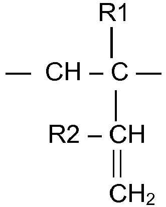 selon une fraction molaire de o %
avec R1 et R2 , identiques ou différents, désignent un atome d'hydrogène, un radical méthyle ou un radical phényle substitué ou non en position ortho, méta ou para par un radical méthyle,
D) 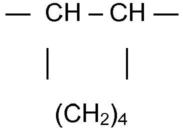 selon un pourcentage molaire de p %
le motif D formant un cycle hydrocarboné bivalent à 6 atomes de carbone, de type 1,2-cyclohexane,
E) 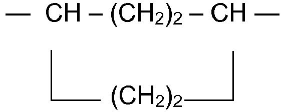 selon un pourcentage molaire de q %
le motif E formant un cycle hydrocarboné bivalent à 6 atomes de carbone de type 1,4-cyclohexane,
avec m, n, o, p et q étant des nombres allant de 0 à 100,
et **en ce que** l'élastomère fortement saturé présente les caractéristiques suivantes:
• m+n+o+p+q=100
• m≥50
• n+o+p+q≥10
• 15≥p+q≥2

2. Composition de caoutchouc selon la revendication 1, **caractérisée en ce que** l'élastomère fortement saturé comprend des unités F
F) 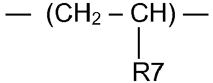 selon un pourcentage molaire de r %
avec R7 désignant un radical alkyle ayant 1 à 4 atomes de carbone, ou un radical aryle,
et **en ce que** l'élastomère fortement saturé présente les caractéristiques suivantes:
• m + n + o + p + q + r = 100
• 25 ≥ r ≥ 0

3. Composition de caoutchouc selon la revendication 1 ou 2, **caractérisée en ce que** les substituants R1 et R2 sont identiques et désignent un atome d'hydrogène

4. Composition de caoutchouc selon l'une quelconque des revendications précédentes, **caractérisée en ce que** l'élastomère fortement saturé présente au moins un des critères suivants, et plus préférentiellement tous:
• m≥65
• n+o+p+q≥15, de préférence encore 20
• 10≥p+q≥2
• 1≥n(o+p+q)
• lorsque q est non nul, 20≥p/q≥1

5. Composition de caoutchouc selon l'une quelconque des revendications précédentes, **caractérisée en ce que** la matrice élastomère est uniquement constituée de l'élastomère diénique fortement saturé.

6. Composition de caoutchouc selon l'une quelconque des revendications 1 à 4, **caractérisée en ce que** la matrice élastomère comprend au moins 40 pce d'élastomère diénique fortement saturé et au plus 60 pce d'au moins un autre élastomère diénique.

7. Composition de caoutchouc selon l'une quelconque des revendications précédentes, **caractérisée en ce que** la charge renforçante comprend du noir de carbone.

8. Composition de caoutchouc selon la revendication 7, **caractérisée en ce que** la charge renforçante est constituée à 100% de noir de carbone.

9. Composition de caoutchouc selon l'une quelconque des revendications 1 à 7, **caractérisée en ce que** la charge renforçante comprend une charge inorganique renforçante autre que du noir de carbone, de préférence de la silice.

10. Procédé de préparation d'une composition de caoutchouc telle que définie dans l'une quelconque des revendications 1 à 9, **caractérisée en ce qu'**elle comporte au moins les étapes suivantes :
• la réalisation, à une température maximale comprise entre 130 °C et 200 °C, de préférence entre 145°C et 185°C, d'un premier temps de travail thermomécanique des constituants de base nécessaires de la composition de caoutchouc, à l'exception du système de réticulation et le cas échéant un promoteur d'adhésion, par incorporation de manière intime, par malaxage en une ou plusieurs étapes, à la matrice élastomère comprenant l'élastomère fortement saturé, d'ingrédients de la composition, puis
• la réalisation, à une température inférieure à ladite température maximale dudit premier temps, de préférence inférieure à 120 °C, d'un second temps de travail mécanique au cours duquel sont incorporé ledit système de réticulation et le cas échéant un promoteur d'adhésion.

11. Procédé selon la revendication 10, **caractérisé en ce qu'**elle comprend l'étape de préparation de l'élastomère fortement saturé.

12. Article semi-fini comprenant une composition de caoutchouc telle que définie dans l'une quelconque des revendications 1 à 9.

13. Pneumatique incorporant un article semi-fini selon la revendication 12.

14. Pneumatique selon la revendication 13, **caractérisé en ce que** l'article semi-fini est une bande de roulement.

## Patentansprüche

1. Kautschukzusammensetzung auf Basis eines verstärkenden Füllstoffs und einer Elastomermatrix, die ein hochgesättigtes Dienelastomer umfasst, **dadurch gekennzeichnet, dass** das hochgesättigte Elastomer mindestens die Einheiten der folgenden Kategorien A, B, C, D und E, die im Elastomer statistisch verteilt sind, umfasst:
A)
-CH₂-CH₂-
gemäß einem molaren Anteil von m %,
B) 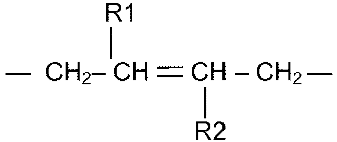 gemäß einem molaren Anteil von n %,
C) 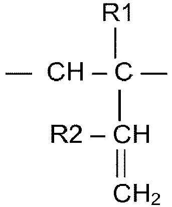 gemäß einem molaren Anteil von ○ %,
wobei R1 und R2 gleich oder verschieden sind und für ein Wasserstoffatom, einen Methylrest oder einen Phenylrest, der gegebenenfalls in ortho-, meta- oder para-Position durch einen Methylrest substituiert ist, stehen,
D) 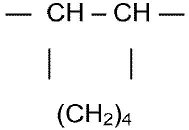 gemäß einem molaren Prozentanteil von p %,
wobei die Einheit D einen zweiwertigen Kohlenwasserstoffring mit 6 Kohlenstoffatomen vom 1,2-Cyclohexan-Typ bildet,
E) 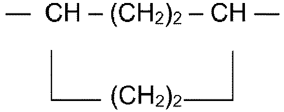 gemäß einem molaren Prozentanteil von q %,
wobei die Einheit E einen zweiwertigen Kohlenwasserstoffring mit 6 Kohlenstoffatomen vom 1,4-Cyclohexan-Typ bildet,
wobei m, n, o, p und q Zahlen im Bereich von 0 bis 100 sind,
und dass das hochgesättigte Elastomer die folgenden Merkmale aufweist:
• m+n+o+p+q=100
• m≥50
• n+o+p+q≥10
• 15≥p+q≥2.

2. Kautschukzusammensetzung nach Anspruch 1, **dadurch gekennzeichnet, dass** das hochgesättigte Elastomer Einheiten F
F) 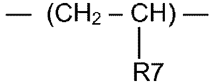 gemäß einem molaren Prozentanteil von r %
wobei R7 für einen Alkylrest mit 1 bis 4 Kohlenstoffatomen oder einen Arylrest steht, umfasst und dass das hochgesättigte Elastomer die folgenden Merkmale aufweist:
• m+n+o+p+q+r=100
• 25≥r≥0.

3. Kautschukzusammensetzung nach Anspruch 1 oder 2, **dadurch gekennzeichnet, dass** die Substituenten R1 und R2 gleich sind und für ein Wasserstoffatom stehen.

4. Kautschukzusammensetzung nach einem der vorhergehenden Ansprüche, **dadurch gekennzeichnet, dass** das hochgesättigte Elastomer mindestens eines und weiter bevorzugt alle der folgenden Kriterien aufweist:
• m≥65
• n+o+p+q≥15, weiter bevorzugt 20
• 1≥>p+q≥2
• 1≥n/(o+p+q)
• wenn q nicht null ist, 20 ≥ p / q ≥ 1.

5. Kautschukzusammensetzung nach einem der vorhergehenden Ansprüche, **dadurch gekennzeichnet, dass** die Elastomermatrix nur aus dem hochgesättigten Dienelastomer besteht.

6. Kautschukzusammensetzung nach einem der Ansprüche 1 bis 4, **dadurch gekennzeichnet, dass** die Elastomermatrix mindestens 40 phe hochgesättigtes Dienelastomer und höchstens 60 phe mindestens eines anderen Dienelastomers umfasst.

7. Kautschukzusammensetzung nach einem der vorhergehenden Ansprüche, **dadurch gekennzeichnet, dass** der verstärkende Füllstoff Ruß umfasst.

8. Kautschukzusammensetzung nach Anspruch 7, **dadurch gekennzeichnet, dass** der verstärkende Füllstoff zu 100% aus Ruß besteht.

9. Kautschukzusammensetzung nach einem der Ansprüche 1 bis 7, **dadurch gekennzeichnet, dass** der verstärkende Füllstoff einen anderen verstärkenden anorganischen Füllstoff als Ruß, vorzugsweise Siliciumdioxid, umfasst.

10. Verfahren zur Herstellung einer Kautschukzusammensetzung gemäß einem der Ansprüche 1 bis 9, **dadurch gekennzeichnet, dass** es mindestens die folgenden Schritte umfasst:
• die Durchführung eines ersten Schritts der thermomechanischen Bearbeitung der für die Kautschukzusammensetzung benötigten Grundbestandteile mit Ausnahme des Vernetzungssystems und gegebenenfalls eines Haftvermittlers bei einer Höchsttemperatur zwischen 130°C und 200°C, vorzugsweise zwischen 145°C und 185°C, durch inniges Einarbeiten von Bestandteilen der Zusammensetzung in die Elastomermatrix, die das hochgesättigte Elastomer umfasst, durch Kneten in einem oder mehreren Schritten und dann
• die Durchführung eines zweiten Schritts der mechanischen Bearbeitung bei einer Temperatur, die unter der Höchsttemperatur des ersten Schritts, vorzugsweise unter 120°C, liegt, in dessen Verlauf das Vernetzungssystem und gegebenenfalls ein Haftvermittler eingearbeitet werden.

11. Verfahren nach Anspruch 10, **dadurch gekennzeichnet, dass** es den Schritt der Herstellung des hochgesättigten Elastomers umfasst.

12. Halbzeug, umfassend eine Kautschukzusammensetzung gemäß einem der Ansprüche 1 bis 9.

13. Reifen mit einem Halbzeug nach Anspruch 12.

14. Reifen nach Anspruch 13, **dadurch gekennzeichnet, dass** es sich bei dem Halbzeug um eine Lauffläche handelt.

## Claims

1. Rubber composition based on a reinforcing filler and on an elastomer matrix comprising a highly saturated diene elastomer, **characterized in that** the highly saturated elastomer comprises at least the units of the following categories A, B, C, D and E, distributed randomly within the elastomer:
A)
-CH₂-CH₂-
at a molar fraction of m%
B) 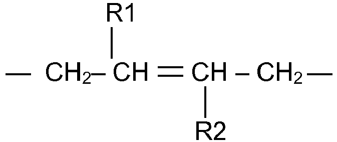 at a molar fraction of n%
C) 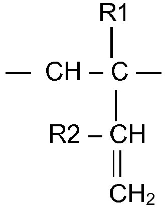 at a molar fraction of o%
where R1 and R2, which are identical or different, denote a hydrogen atom, a methyl radical or a phenyl radical which is substituted or unsubstituted in the ortho, meta or para position by a methyl radical,
D) 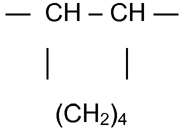 at a molar percentage of p%
the unit D forming a divalent hydrocarbon-based ring with 6 carbon atoms, of 1,2-cyclohexane type,
E) 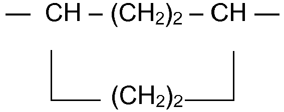 at a molar percentage of q%
the unit E forming a divalent hydrocarbon-based ring with 6 carbon atoms, of 1,4-cyclohexane type,
with m, n, o, p and q being numbers ranging from 0 to 100;
and **in that** the highly saturated elastomer has the following features:
• m+n+o+p+q=100
• m≥50
• n+o+p+q≥10
• 15≥p+q≥2

2. Rubber composition according to Claim 1, **characterized in that** the highly saturated elastomer comprises units F
F) 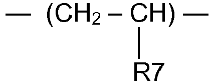 at a molar percentage of r%
with R7 denoting an alkyl radical having from 1 to 4 carbon atoms, or an aryl radical,
and **in that** the highly saturated elastomer has the following features:
• m+n+o+p+q+r=100
• 25≥r≥0

3. Rubber composition according to Claim 1 or 2, **characterized in that** the substituents R1 and R2 are identical and denote a hydrogen atom.

4. Rubber composition according to any one of the preceding claims, **characterized in that** the highly saturated elastomer fulfils at least one of the following criteria, and more preferably all of them:
• m≥65
• n+o+p+q≥15, more preferably 20
• 10≥p+q≥2
• 1≥n/(o+p+q)
• when q is not zero, 20≥ p/q≥1

5. Rubber composition according to any one of the preceding claims, **characterized in that** the elastomer matrix consists solely of the highly saturated diene elastomer.

6. Rubber composition according to any one of Claims 1 to 4, **characterized in that** the elastomer matrix comprises at least 40 phr of highly saturated diene elastomer and at most 60 phr of at least one other diene elastomer.

7. Rubber composition according to any one of the preceding claims, **characterized in that** the reinforcing filler comprises carbon black.

8. Rubber composition according to Claim 7, **characterized in that** the reinforcing filler consists of 100% of carbon black.

9. Rubber composition according to any one of Claims 1 to 7, **characterized in that** the reinforcing filler comprises an inorganic reinforcing filler other than carbon black, preferably silica.

10. Process for preparing a rubber composition as defined in any one of Claims 1 to 9, **characterized in that** it comprises at least the following steps:
• carrying out, at a maximum temperature of between 130°C and 200°C, preferably between 145°C and 185°C, a first step of thermomechanical working of the base constituents needed for the rubber composition, with the exception of the crosslinking system and if applicable an adhesion promoter, by intimately incorporating, by kneading in one or more stages, composition ingredients into the elastomer matrix comprising the highly saturated elastomer, then
• carrying out, at a temperature lower than the said maximum temperature of the said first step, preferably lower than 120°C, a second step of mechanical working during which the said crosslinking system and if applicable an adhesion promoter are incorporated.

11. Process according to Claim 10, **characterized in that** it comprises the step of preparing the highly saturated elastomer.

12. Semi-finished article comprising a rubber composition as defined in any one of Claims 1 to 9.

13. Tyre incorporating a semi-finished article according to Claim 12.

14. Tyre according to Claim 13, **characterized in that** the semi-finished article is a tread.
